# EUROPEAN PATENT APPLICATION

(11) **EP 4 319 450 A1**
(43) Date of publication of application: **07.02.2024**
(21) Application number: 22810213.3
(22) Date of filing: 07.04.2022
(51) Int. Cl.: H04W 76/10

(54) **METHOD AND APPARATUS FOR ENHANCING IMS SERVICE, ELECTRONIC DEVICE, AND STORAGE MEDIUM**

(30) Priority: 24.05.2021 CN 202110565670
(71) Applicant: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Savi, Massimiliano
(86) International application number: PCT/CN2022/085591
(87) International publication number: WO 2022/247480

(57) **Abstract**

Embodiments of the present application relate to the field of communication transmission, and provide a method and apparatus for enhancing an IMS service, an electronic device, and a storage medium. The method comprises: measuring the transmission quality of service data of an IP multimedia subsystem (IMS) on a first channel of a terminal and a network side, the first channel being a 3GPP channel or a non-3GPP channel in a multi-access protocol data unit (MA PDU) session of the terminal and network side; if detected that the transmission quality on the first channel is lower than a first threshold, then interrupting the sending of the IMS service data that takes place by means of the first channel; simultaneously transmitting the IMS service data with the network side by means of at least two channels of the MA PDU session, the at least two channels comprising at least one 3GPP channel and at least one non-3GPP channel; and in response to receiving the IMS service data of the network side, performing redundant processing on the received IMS service data, so as to obtain IMS service data for displaying to a user.

## Description

### CROSS-REFERENCE TO RELATED APPLICATION

The present application is filed on the basis of Chinese patent application 202110565670.8 filed May 24, 2021, and claims priority to the Chinese patent application, the entire contents of which are incorporated herein by reference.

### TECHNICAL FIELD

Embodiments of the present disclosure relate to the field of communication transmission, and in particular to a method and apparatus for enhancing IMS services, an electronic device and a storage medium.

### BACKGROUND

Originating call and terminating call belong to the basic communication capabilities of operators. With the internationalization of operator networks, all voice services will be carried based on Internet Protocols (IPs), and the transmission scheme based on IP Multimedia Subsystem (IMS) data services will become the main approach to provide voice services. Through an IMS network, an operator can not only seamlessly inherit traditional voice and short message services, but also integrate voice services with rich enhanced functions to provide diversified services. The IMS network is access-independent, such that a user can access through a cellular network in the 3rd Generation Partnership Project (3GPP) or a Wi-Fi network in the non-3GPP, to make calls. A transmission scheme of IMS data services supports seamless switching between 3GPP and non-3GPP at the same time, ensuring the continuity of voice services.

However, as far as the current wireless network technology is concerned, regardless of 3GPP or non-3GPP, the network performance and stability can hardly achieve the wired level due to the attenuation and blockage of wireless signals. The existing transmission scheme of IMS service data is suffering from, for example, long information interaction latency, unsatisfactory stability and user experience, etc., and therefore needs to be improved and

### SUMMARY

An embodiment of the present disclosure provides a method for enhancing IMS services, which is applied to a terminal device. The method includes: measuring a transmission quality of IP Multimedia Subsystem (IMS) service data on a first channel between the terminal device and a network side, where the first channel is a 3rd Generation Partnership Project (3GPP) channel or a non-3GPP channel in a Multi-Access Protocol Data Unit (MA PDU) session between the terminal device and the network side; in response to a measurement that the transmission quality of the IMS service data on the first channel is lower than a first threshold, interrupting the transmission of the IMS service data through the first channel; transmitting the IMS service data simultaneously between the terminal device and the network side through at least two channels of the MA PDU session, where the at least two channels include at least one 3GPP channel and at least one non-3GPP channel; and in response to receiving the IMS service data through the at least two channels, performing redundant processing on the IMS service data to obtain IMS service data to be displayed to a user.

An embodiment of the present disclosure provides a method for enhancing IMS services, which is applied to a network-side device. The method includes: receiving an establishment request of at least two channels sent by a terminal device through a MA PDU session, and establishing at least two channels of the MA PDU session simultaneously with the terminal device, where the at least two channels include at least one 3GPP channel and at least one non-3GPP channel; and transmitting IMS service data simultaneously between the network-side device and the terminal device through the at least two channels of the MA PDU session, such that the terminal device obtains IMS service data to be displayed to a user after performing redundant processing on the IMS service data.

An embodiment of the present disclosure provides an apparatus for enhancing IMS services. The apparatus includes: a measurement unit, configured to measure a transmission quality of IMS service data on a first channel between a terminal device and a network side, where the first channel is a 3GPP channel or a non-3GPP channel in a MA PDU session between the terminal device and the network side; an interruption unit, configured to interrupt the transmission of the IMS service data through the first channel in response to a measurement that the transmission quality of the IMS service data on the first channel is lower than a first threshold; a transmission unit, configured to transmit the IMS service data between the terminal device and the network side through at least two channels of the MA PDU session simultaneously, where the at least two channels include at least one 3GPP channel and at least one non-3GPP channel; and a processing unit, configured to perform redundant processing on the IMS service data to obtain IMS service data to be displayed to a user in response to receiving the IMS service data through the at least two channels.

An embodiment of the present disclosure provides an electronic device. The device includes: at least one processor, and a memory communicatively connected with the at least one processor, where the memory stores an instruction executable by the at least one processor which, when executed by the at least one processor, cause the at least one processor to implement the above-mentioned method for enhancing IMS services applied to a terminal device or implement the above-mentioned method for enhancing IMS services applied to a network-side device.

An embodiment of the present disclosure provides a computer-readable storage medium, storing a computer program which, when executed by a processor, causes the processor to implement the above-mentioned method for enhancing IMS services applied to a terminal device or implement the above-mentioned method for enhancing IMS services applied to a network-side device.

### BRIEF DESCRIPTION OF DRAWINGS

One or more embodiments are described in conjunction with the drawings. The description is not intended to limit the embodiments. Elements with like reference numerals in the drawings indicate the same or similar elements. The figures in the drawings are not drawn to scale, unless otherwise specified.
Fig. 1 is a flowchart of a method for enhancing IMS services provided by an implementation of the present disclosure;
Fig. 2 is a flowchart of a method for enhancing IMS services provided by another implementation of the present disclosure;
Fig. 3 is a flowchart of a method for enhancing IMS services applied to a network-side device provided by an implementation of the present disclosure;
Fig. 4 is a schematic diagram of an apparatus for enhancing IMS services provided by an implementation of the present disclosure; and
Fig. 5 shows an electronic device provided by an implementation of the present disclosure.

### DETAILED DESCRIPTION

In order to make the objects, technical scheme and advantages of embodiments of the present disclosure clear, various embodiments of the present disclosure will be described in detail in conjunction with the drawings. It can be understood by those having ordinary skills in the art that in the embodiments of the present disclosure, many technical details are put forward in order to allow the readers to better understand the present disclosure. However, the technical scheme claimed in the present disclosure can be implemented, even without these technical details and various changes and modifications based on the following embodiments. The following divisions of the various embodiments are for convenience of description, and shall not be construed as constituting any limitation to the implementations of the present disclosure. The various embodiments may be combined with each other and referenced to each other if not in collision.

The terms "first", "second" and the like in the embodiments of the present disclosure are only used for the purpose of description, and are not intended to be understood as indicating or implying relative importance or hint the number of indicated technical features. Therefore, the features limited by "first", "second" and the like may explicitly or impliedly include at least one of the features. In the description of the present disclosure, the terms "include" and "have" and any variant thereof are intended to cover non-exclusive inclusion. For example, systems, products, or devices which include a series of components or units are not limited to including the listed components or units, but may alternatively include unlisted components or units, or alternatively include other components or units inherent to these products or devices. In the description of the present disclosure, the meaning of "a plurality of" means at least two, such as two, three, etc., unless otherwise specifically defined.

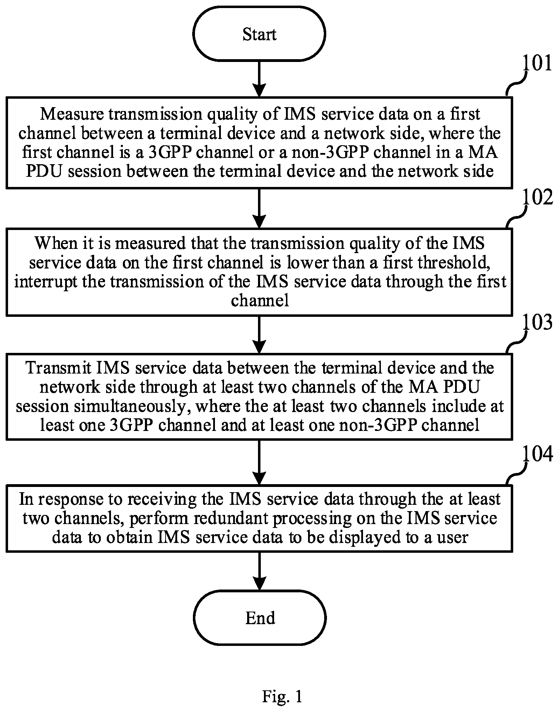

A first implementation of the present disclosure relates to a method for enhancing IMS services applied to a terminal device. The process flow is shown in Fig.1.

At a step 101, a transmission quality of IMS service data on a first channel between the terminal device and a network side is measured, where the first channel is a 3GPP channel or a non-3GPP channel in an MA PDU session between the terminal device and the network side.

At a step 102, when it is measured that the transmission quality of the IMS service data on the first channel is lower than a first threshold, the transmission of the IMS service data through the first channel is interrupted.

At a step 103, the IMS service data is transmitted between the terminal device and the network side through at least two channels of the MA PDU session simultaneously, where the at least two channels include at least one 3GPP channel and at least one non-3GPP channel.

At a step 104, in response to receiving the IMS service data through the at least two channels, redundant processing is performed on the IMS service data to obtain IMS service data to be displayed to a user.

In this embodiment, a MA PDU session scenario is adopted. When it is measured that the transmission quality of the IMS service data on the first channel between the terminal device and the network side is lower than the preset first threshold, the current transmission of the service data is interrupted, and the IMS service data is re-transmitted through at least two channels in the MA PDU session. Therefore, a stable transmission of the IMS service data between the terminal device and the network side can always be guaranteed. Meanwhile, the transmission latency of the IMS service data can be reduced to ensure the stability of transmission, and redundant processing can be performed on the received data by the terminal device to reduce content errors caused by data redundancy and optimize the user experience.

Details of the method for enhancing IMS services in this implementation will be described below. The following content is provided only for the convenience of understanding, and is not a necessity for implementing this scheme.

In the step 101, a transmission quality of IMS service data on a first channel between the terminal device and a network side is measured, where the first channel is a 3GPP channel or a non-3GPP channel in a MA PDU session between the terminal device and the network side. In an implementation, the first channel may be the 3GPP channel (e.g., a 5G channel) or the non-3GPP channel (e.g., a Wi-Fi channel) in the MA PDU session. In addition, there is a call module in the terminal device, which is utilized as a functional module and configured to display IMS service information to a user. That is, the quality in the channel where the IMS service data is being transmitted is measured. If the quality in the first channel reaches the standard (for example, the transmission quality in the channel is not lower than the preset first threshold), a current service data transmission process is maintained without changing the current service data transmission channel and mode. In this step, corresponding calculation processes of the terminal device can be reduced while satisfying the service transmission quality.

In an implementation, the measured parameters include, but not limited to: a Real-time Transport Protocol (RTP) packet loss rate, a Real-time Transport Control Protocol (RTCP) packet loss rate, a bit error rate, latency, jitter, and the like.

The IMS service data includes, but not limited to: audio stream, video stream, data stream and the like, and may be embodied as RTP messages in some examples.

In an example, prior to this step, the method includes: establishing, by the terminal device, a MA PDU session with a network side supporting Access Traffic Steering Switching Splitting (ATSSS), monitoring Network steering functionalities information issued by the network side, and parsing an IP address of a MultiPath TCP (MPTCP) proxy from the Network steering functionalities information after receiving the Network steering functionalities information, where the IP address is an accurate target object for IMS service data transmission from the terminal device to the network side. According to the 3GPP TS 24.193 specification, the Network steering functionalities information issued by the network side carries information about the IP address of the MPTCP proxy of the network side.

In the step 102, when it is measured that the transmission quality of the IMS service data on the first channel is lower than a first threshold, the transmission of the IMS service data through the first channel is interrupted. That is, when it is measured that the transmission quality in the first channel where IMS service data is being transmitted is lower (for example, lower than the preset first threshold), the transmission of the IMS service data through the channel is interrupted, to avoid high transmission latency of the channel and unstable transmission process, which leads to unsatisfactory user experience.

In an example, the first channel may be a 5G channel. That is, in this step, the signal transmission quality in the 5G channel is measured.

In the step 103, the IMS service data is transmitted between the terminal device and the network side through at least two channels of the MA PDU session simultaneously, where the at least two channels include at least one 3GPP channel and at least one non-3GPP channel. That is, when it is measured that the transmission quality in the data transmission channel is too low, the current information transmission process is interrupted, and the data transmission channel is replaced with a new transmission channel with theoretically higher transmission quality to transmit the IMS service data. For example, the call module of the terminal device transmits IMS service data to a first proxy module of the terminal device. The first proxy module establishes at least two transmission channels for the IMS service data simultaneously between the terminal device and the network side through at least two channels of the MA PDU session. Since the IMS service data transmitted in the at least two transmission channels for the IMS service data are identical, the first proxy module performs redundant processing on the received data. The network side is a device for implementing establishment of the transmission channels for the IP address of the MPTCP proxy.

Because there are at least two transmission channels, and the data on the at least two transmission channels are identical, the stability and timeliness of IMS service data transmission can be guaranteed. Even if the service data on one channel is delayed or fails, the service data can be supplemented and completed by the data on other channels.

In an example, the call module of the terminal device transmits the IMS service data to the first proxy module, and the first proxy module establishes Socket connection with the IP address of the MPTCP proxy at the network side on the 3GPP channel (e.g., a 5G channel) and the non-3GPP channel (e.g., a Wi-Fi channel) respectively, and sends the IMS service data.

In this step, the terminal device re-selects channels for IMS service data transmission between the terminal device and the network side and implements data transmission. Since at least two transmission channels are re-established, the transmission stability of the IMS service data can be guaranteed, and transmission latency of the IMS service data can be reduced, optimizing the user experience.

According to the 3GPP TS 24.193 specification, an 'Active Standby' instruction may be used to instruct to use only a certain specified channel. The terminal device preferentially uses the Active channel, and uses the Standby channel instead when the Active channel is unavailable. That is, in this standard, the terminal device is supported to send channel selection instructions.

In another example, after transmitting the IMS service data between the terminal device and the network side through at least two channels of the MA PDU session simultaneously, the method includes: sending a first session modification request to the network side, where the first session modification request is used to trigger the network side to perform redundant processing on the IMS service data. That is, after the network side receives the first session modification request, redundant processing can be performed on the IMS service data sent by the terminal device on the network side, to reduce data duplication so as to reduce the calculation amount of the network side and reduce the transmission latency of the IMS service data from the terminal device to the network side. In this way, the latency of interactive transmission of the IMS service data between the terminal device and the network side is reduced, and the user experience is improved. For example, the first session modification request may be in a format of "Traffic Descriptor: Connectivity Capability=IMS", "Steering Mode: Redundant".

In the step 104, in response to receiving the IMS service data through the at least two channels, redundant processing is performed on the IMS service data to obtain IMS service data to be displayed to a user.

Because there are at least two new data transmission channels established in S103, and the IMS service data in all channels are identical, transmission data redundancy occurs inevitably, and the terminal device receives multiple identical data. Duplicated data will increase the calculation amount of information extracted by the call module. Meanwhile, the probability of terminal device errors will be increased because of the excessive amount of data that needs to be processed.

In an example, performing redundant processing on the received IMS service data includes: checking the received IMS service data; and when receiving identical data contents, discarding IMS service data received not for the first time in the identical data contents. That is, all the received IMS service data are selected and judged, only the data received for the first time are reserved, and the data received repeatedly are discarded. In this way, not only the transmission stability of the IMS service data can be guaranteed, but also the transmission latency of the IMS service data can be reduced.

In an implementation, after the first proxy module performs on the received IMS service data, the data subjected to redundant processing is transmitted to the call module of the terminal device, such that the terminal device can parse actually needed valid information through the call module and display the valid information to the user, thus completing the IMS service interaction flow between the terminal device and the network side.

This embodiment provides a method for enhancing IMS services, which is applied in a MA PDU session scenario. When it is measured that a transmission quality of IMS service data on a first channel between a terminal device and a network side is lower than a preset first threshold, the transmission process of the IMS service data directly initiated by a call module to the network side is interrupted, and the service data is transmitted by the call module of the terminal device to a first proxy module of the terminal device. Then, simultaneous transmission of IMS service data on at least two channels in the MA PDU session to the network side is initiated by the first proxy module, and the IMS service data on the at least two channels are identical. Therefore, a stable transmission of the IMS service data between the terminal device and the network side can always be guaranteed. Meanwhile, for the received identical data, the first proxy module only reserves data received for the first time. Thus, the data transmission latency can be further reduced, and redundant information sent by the network side is processed to reduce the excessive calculation amount or content errors of the terminal device caused by data redundancy.

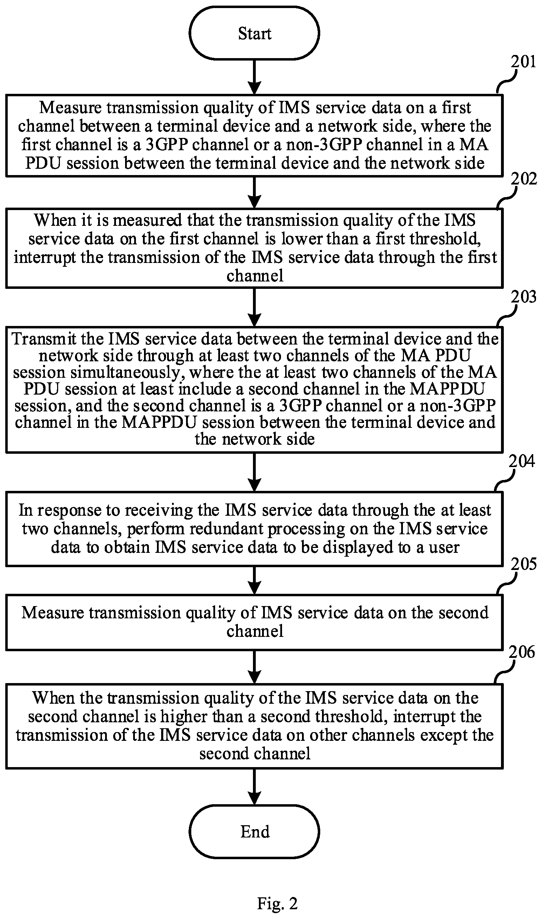

A second implementation of the present disclosure relates to a method for enhancing IMS services, which is applied to a terminal device. The process flow is shown in Fig. 2.

At a step 201, a transmission quality of IMS service data on a first channel between the terminal device and a network side is measured, where the first channel is a 3GPP channel or a non-3GPP channel in a MA PDU session between the terminal device and the network side.

At a step 202, when it is measured that the transmission quality of the IMS service data on the first channel is lower than a first threshold, the transmission of the IMS service data through the first channel is interrupted.

At a step 203, the IMS service data is transmitted between the terminal device and the network side through at least two channels of the MA PDU session simultaneously, where the at least two channels of the MA PDU session at least include a second channel in the MA PDU session, and the second channel is a 3GPP channel or a non-3GPP channel in the MA PDU session between the terminal device and the network side.

At a step 204, in response to receiving the IMS service data through the at least two channels, redundant processing is performed on the IMS service data to obtain IMS service data to be displayed to a user.

At a step 205, a transmission quality of IMS service data on the second channel is measured.

At a step 206, when the transmission quality of the IMS service data on the second channel is higher than a second threshold, the transmission of the IMS service data on other channels except the second channel is interrupted.

The steps 201 to 202 and 204 are basically the same as those in the first implementation, which will not be repeated here to avoid repetition. The difference lies in the step 203, and the steps 205 to 206, which will be described in detail below.

In the step 203, IMS service data is re-transmitted between the terminal device and the network side through at least two channels of the MA PDU session. In an example, the selected channels at least include a second channel in the MA PDU session, and the second channel is a 3GPP channel or a non-3GPP channel in the MA PDU session between the terminal device and the network side. For example, if the first channel is the 3GPP channel, for example a 5G channel, the second channel is the non-3GPP channel, for example a Wi-Fi channel; and if the first channel is the non-3GPP channel, for example a Wi-Fi channel, the second channel is the 3GPP channel, for example a 5G channel. Among the at least two selected channels, except for the second channel, the selected channels may include an original first channel.

In the steps 205 to 206, after a first proxy module of the terminal device transmits the IMS service data to the network side and performs redundant processing, a transmission quality of a second transmission channel between the first proxy module and the network side is measured. When the transmission quality of IMS service data on the second channel is higher than the second threshold, the channel for transmission of IMS service data between the first proxy module and the network side is interrupted. Then, a call module of the terminal device is used to implement the transmission of IMS service data between the terminal device and the network side through the second channel in the MA PDU session.

In an implementation, the transmission quality of the second channel in the MA PDU session is measured to judge whether the transmission quality of the second channel meets the requirements of transmission of the IMS service data between the terminal device and the network side (that is, the transmission quality is higher than the second threshold). If the transmission quality is higher than the second threshold, it indicates that the transmission quality of the second channel is high enough, the requirements of transmission of the IMS service data between the terminal device and the network side can still be met even if only a single channel is adopted. Therefore, when it is judged that the transmission quality of the second channel is higher than the second threshold, the transmission of multi-channel IMS service data between the proxy module of the terminal device and the network side is interrupted. Meanwhile, the call module does not transmit the IMS service data to the proxy module, but directly performs IMS service data interaction with the network side through the second channel.

In an example, when the transmission quality of the IMS service data on the second channel is higher than the second threshold, the method includes: sending a second session modification request to the network side, where the second session modification request is used to trigger the network side to only reserve an information transceiving function performed through the second channel. That is, when adjusting the transmission channel, the terminal device sends a second session modification request to the network side, which can trigger the network side to actively change the transmission channel and only reserve the information transceiving function performed through the second channel. In this way, the data calculation amount of the network side is greatly reduced while guaranteeing the transmission of the IMS service data between the terminal device and the network side, thereby improving the information processing rate of the network side, and optimizing the user experience.

Taking an actual execution process as an example, when the second channel is a Wi-Fi channel, the terminal device sends a second session modification request to the network side, to inform the network side that only the Wi-Fi channel will be used in the session. The request may be in a format of, for example, "Traffic Descriptor: Connectivity Capability=IMS", "Steering Mode: Active-Standby, Active=non-3GPP, Standby=3GPP".

In this implementation, a stable transmission of the IMS service data between the terminal device and the network side can always be guaranteed, and the proxy module has the function of processing the redundancy of data received by the terminal device to reduce the content errors caused by the redundancy of data. In addition, multiple channels in use are subjected to transmission quality judgement and selection. If there is a channel that can meet the requirement of separate IMS service data transmission, a current transmission of multi-channel IMS service data through the first proxy module is interrupted, and the IMS service data is re-transmitted by the call module between the terminal device and the network side through the channel meeting the transmission requirements. In this way, the calculation amount required by both parties to maintain multi-channel information interaction is reduced, the information processing efficiency is improved, and the user experience is optimized.

The division of steps of the above methods is only for the purpose of clear description. When implemented, some steps may be combined into one step or a step may be split into multiple steps, which all fall within the protection scope of the present disclosure as long as they include the same logical relationship. It is within the protection scope of the present disclosure to add insignificant modification or introduce insignificant design to the algorithm or process flow without changing the core design of the algorithm and process flow.

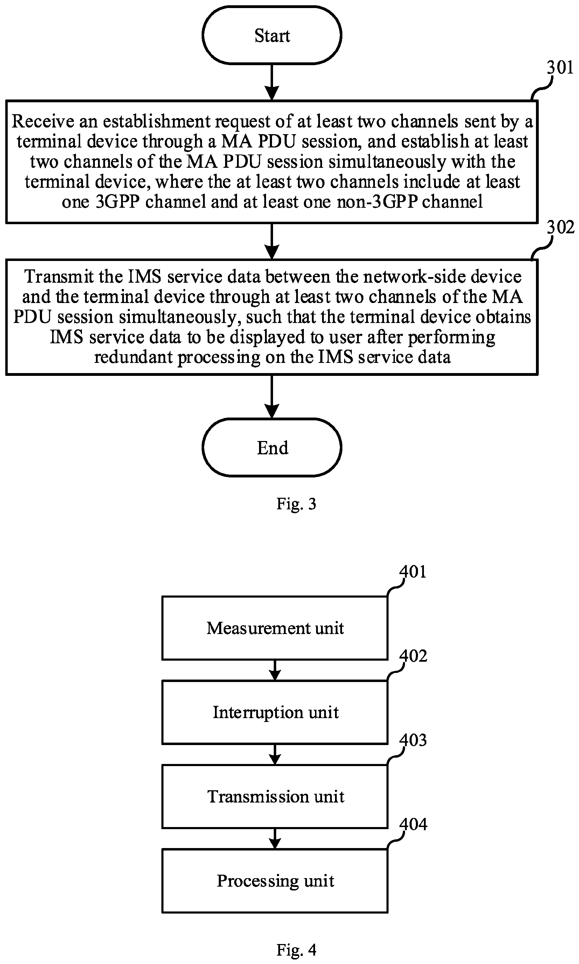

A third implementation of the present disclosure relates to a method for enhancing IMS services, which is applied to a network-side device. The method is shown in Fig. 3.

At a step 301, an establishment request of at least two channels sent by a terminal device through a MA PDU session is received, and at least two channels of the MA PDU session are established simultaneously with the terminal device, where the at least two channels include at least one 3GPP channel and at least one non-3GPP channel.

At a step 302, the IMS service data is transmitted between the network-side device and the terminal device through at least two channels of the MA PDU session simultaneously, such that the terminal device obtains IMS service data to be displayed to a user after performing redundant processing on the IMS service data.

Prior to the step 301, the IMS service data is transmitted between the network-side device and the terminal device through a first channel, but the terminal device measures that the transmission quality of IMS service data in the first channel is low, so the transmission of the IMS service data through the first channel is interrupted. Therefore, in the step 301, when receiving an establishment request of at least two channels sent by the terminal device through the MA PDU session, at least two transmission channels for IMS service data are established simultaneously with the terminal device to complete the transmission of the IMS service data, where the at least two channels include at least one 3GPP channel and at least one non-3GPP channel. In an example, the step 301 may be completed by interacting with a first proxy module of the terminal device.

In the step 302, the IMS service data is transmitted between the network-side device and the terminal device through at least two channels of the MA PDU session simultaneously, such that the terminal device obtains IMS service data to be displayed to a user after performing redundant processing on the IMS service data.

In an example, after the establishing at least two channels of the MA PDU session simultaneously with the terminal device, the method includes: receiving a first session modification request sent by the terminal device; and performing redundant processing on the received IMS service data sent by the first proxy module. That is, the first session modification request can trigger the network side to perform redundant processing on the received IMS service data. The network side has a redundant processing device configured to perform redundant processing on the received IMS service data.

Redundant processing includes, for example, receiving, by the redundant processing device of the network side, the IMS service data sent by the terminal device, performing redundancy detection according to a Data Sequence Number (DSN) of the IMS service data, directly discarding the IMS service data when a duplicate DSN is detected, otherwise extracting contents of the IMS service data, and forwarding, according to a target IP address in a header of the IMS service data, the processed IMS service data to a device corresponding to the IP.

In this implementation, a method for enhancing IMS services applied to a network-side device is provided, which can always guarantee a stable transmission of the IMS service data between a terminal device and a network side, reduce data redundancy and transmission latency, and optimize the user experience.

A fourth implementation of the present disclosure relates to an apparatus for enhancing IMS services. As shown in Fig. 4, the apparatus includes: a measurement unit 401, an interruption unit 402, a transmission unit 403 and a processing unit 404.

The measurement unit 401 is configured to measure a transmission quality of IMS service data on a first channel between a terminal device and a network side, where the first channel is a 3GPP channel or a non-3GPP channel in a MA PDU session between the terminal device and the network side.

The interruption unit 402 is configured to interrupt transmission of the IMS service data through the first channel when it is measured that the transmission quality of the IMS service data on the first channel is lower than a first threshold.

The transmission unit 403 is configured to transmit the IMS service data between the terminal device and the network side through at least two channels of the MA PDU session simultaneously, where the at least two channels include at least one 3GPP channel and at least one non-3GPP channel.

The processing unit 404 is configured to perform redundant processing on the IMS service data to obtain IMS service data to be displayed to a user in response to receiving the IMS service data through the at least two channels.

The transmission unit 403 is further configured to, after transmitting the IMS service data between the terminal device and the network side through at least two channels of the MA PDU session simultaneously, send a first session modification request to the network side, where the first session modification request is used to trigger the network side to perform redundant processing on the IMS service data.

In an example, the at least two channels of the MA PDU session at least include a second channel in the MA PDU session, and the second channel is a 3GPP channel or a non-3GPP channel in the MA PDU session between the terminal device and the network side.

In the processing unit 404, performing redundant processing on the received IMS service data includes: checking the IMS service data; and when receiving identical data contents, discarding IMS service data received not for the first time in the identical data contents.

The processing unit 404 is further configured to, after obtaining IMS service data to be displayed to a user, measure a transmission quality of IMS service data on the second channel; and when the transmission quality of the IMS service data on the second channel is higher than a second threshold, interrupt the transmission of the IMS service data on other channels except the second channel.

In an example, when the transmission quality of IMS service data on the second channel is higher than the second threshold, a second session modification request is sent to the network side, where the second session modification request is used to trigger the network side to only reserve the information transceiving function performed through the second channel.

In this implementation, a MA PDU session scenario is adopted. When it is measured that the transmission quality of the IMS service data on the first channel between the terminal device and the network side is lower than a preset first threshold, a current transmission of the service data is interrupted, and the IMS service data is re-transmitted through at least two channels in the MA PDU session. Therefore, a stable transmission of the IMS service data between the terminal device and the network side can always be guaranteed. Meanwhile, the data transmission latency can be reduced, and redundant processing can be performed on the received data by the terminal device to reduce content errors caused by data redundancy.

Because the above-mentioned implementation(s) correspond to this implementation, this implementation can be implemented in cooperation with the above-mentioned implementation(s). The related technical details mentioned in the above-mentioned implementation(s) are still valid in this implementation, and the technical effects that can be achieved in the above-mentioned implementation(s) can also be achieved in this implementation, which will not be repeated here to avoid repetition. Accordingly, the related technical details mentioned in this implementation can also be applied to the above-mentioned implementation(s).

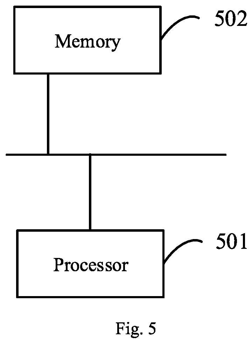

An implementation of the present disclosure relates to an electronic device. As shown in Fig. 5, the device includes at least one processor 501 and a memory 502.

The memory 502 is communicatively connected with the at least one processor. The memory stores an instruction executable by the at least one processor which, when executed by the at least one processor, causes the at least one processor to implement the above-mentioned method for enhancing IMS services applied to a terminal device or perform the above-mentioned method for enhancing IMS services applied to a network-side device.

The memory and the processor are connected by a bus. The bus may include any number of interconnected buses and bridges, and the bus connects various circuits of the one or more processors and the memory. The bus may also connect various of other circuits, such as peripheral devices, voltage regulators and power management circuits, which are well known in the art, and therefore will not be further described here. A bus interface provides an interface between the bus and a transceiver. The transceiver may be an element or may include multiple elements, for example, multiple receivers and transmitters, providing a unit for communicating with various of other devices on a transmission medium. The data processed by the processor is transmitted on a wireless medium through an antenna, and the antenna receives the data and transmits the data to the processor.

The processor is configured for managing the bus and general processing, and can also provide various functions, including timing, peripheral interfacing, voltage regulation, power management and other control functions. The memory may be configured to store data used by the processor in performing operations.

An implementation of the present disclosure relates to a computer-readable storage medium, storing a computer program which, when executed by a processor, causes the processor to implement the above-mentioned method embodiments.

Those having ordinary skills in the art can understand that all or some of the steps in the above-mentioned method embodiments may be completed by instructing related hardware through a program. The program is stored in a storage medium, and includes a plurality of instructions to enable a device (which may be a single-chip microcomputer, a chip, or the like) or a processor to perform all or some of the steps of the methods described in all embodiments of the present disclosure. The above-mentioned storage medium includes: a U disk, a mobile hard disk, a Read-Only Memory (ROM), a Random Access Memory (RAM), a magnetic disks or optical disks and other media that can store program codes.

Those having ordinary skills in the art can understand that the above-mentioned implementations are embodiments for implementing the present disclosure, and in practical applications, various changes may be made in form and details without departing from the spirit and protection scope of the present disclosure.

## Claims

1. A method for enhancing IMS services, which is applied to a terminal device, comprising:
measuring a transmission quality of Internet Protocol (IP) Multimedia Subsystem (IMS) service data on a first channel between the terminal device and a network side, wherein the first channel is a 3rd Generation Partnership Project (3GPP) channel or a non-3GPP channel in a Multi-Access Protocol Data Unit (MA PDU) session between the terminal device and the network side;
in response to a measurement that the transmission quality of the IMS service data on the first channel is lower than a first threshold, interrupting the transmission of the IMS service data through the first channel;
transmitting the IMS service data between the terminal device and the network side through at least two channels of the MA PDU session simultaneously, wherein the at least two channels comprise at least one 3GPP channel and at least one non-3GPP channel; and
in response to receiving the IMS service data through the at least two channels, performing redundant processing on the IMS service data to obtain IMS service data to be displayed to a user.

2. The method for enhancing IMS services of claim 1, wherein performing redundant processing on the IMS service data comprises:
checking the IMS service data; and
in response to receiving identical data contents, discarding IMS service data received not for the first time in the identical data contents.

3. The method for enhancing IMS services of claim 1 or 2, wherein after transmitting the IMS service data between the terminal device and the network side through at least two channels of the MA PDU session simultaneously, the method further comprises:
sending a first session modification request to the network side, wherein the first session modification request is used to trigger the network side to perform redundant processing on the IMS service data.

4. The method for enhancing IMS services of any one of claims 1 to 3, wherein the at least two channels of the MA PDU at least comprise a second channel in the MA PDU session; and the second channel is a 3GPP channel or a non-3GPP channel in the MA PDU session between the terminal device and the network side; and
after performing redundant processing on the IMS service data to obtain IMS service data to be displayed to a user, the method further comprises:
measuring a transmission quality of IMS service data on the second channel; and
in response to the transmission quality of the IMS service data on the second channel being higher than a second threshold, interrupting the transmission of the IMS service data on other channels except the second channel.

5. The method for enhancing IMS services of claim 4, wherein in response to the transmission quality of the IMS service data on the second channel being higher than a second threshold, the method further comprises:
sending a second session modification request to the network side, wherein the second session modification request is used to trigger the network side to only reserve an information transceiving function performed through the second channel.

6. A method for enhancing IMS services, which is applied to a network-side device, comprising:
receiving an establishment request of at least two channels which is sent by a terminal device through a Multi-Access Protocol Data Unit (MA PDU) session, and establishing at least two channels of the MA PDU session simultaneously with the terminal device, wherein the at least two channels comprise at least one 3GPP channel and at least one non-3GPP channel; and
transmitting Internet Protocol (IP) Multimedia Subsystem (IMS) service data between the network-side device and the terminal device through the at least two channels of the MA PDU session simultaneously, such that the terminal device obtains IMS service data to be displayed to a user after performing redundant processing on the IMS service data.

7. The method for enhancing IMS services of claim 6, wherein after establishing at least two channels of the MA PDU session simultaneously with the terminal device, the method further comprises:
receiving a first session modification request which is sent by the terminal device; and
performing redundant processing on the received IMS service data which is sent by the terminal device.

8. An apparatus for enhancing IMS services, comprising:
a measurement unit, configured to measure a transmission quality of Internet Protocol (IP) Multimedia Subsystem (IMS) service data on a first channel between a terminal device and a network side, wherein the first channel is a 3GPP channel or a non-3GPP channel in a Multi-Access Protocol Data Unit (MA PDU) session between the terminal device and the network side;
an interruption unit, configured to interrupt the transmission of the IMS service data through the first channel in response to a measurement that the transmission quality of the IMS service data on the first channel is lower than a first threshold;
a transmission unit, configured to transmit the IMS service data between the terminal device and the network side through at least two channels of the MA PDU session simultaneously, wherein the at least two channels comprise at least one 3GPP channel and at least one non-3GPP channel; and
a processing unit, configured to perform redundant processing on the IMS service data to obtain IMS service data to be displayed to a user, in response to receiving the IMS service data through the at least two channels.

9. An electronic device, comprising:
at least one processor; and
a memory which is communicatively connected with the at least one processor, wherein:
the memory stores an instruction executable by the at least one processor which, when executed by the at least one processor, causes the at least one processor to perform the method for enhancing IMS services of any one of claims 1 to 5 or the method for enhancing IMS services of any one of claims 6 to 7.

10. A computer-readable storage medium, storing a computer program which, when executed by a processor, causes the processor to perform the method for enhancing IMS services of any one of claims 1 to 5 or the method for enhancing IMS services of any one of claims 6 to 7.
